# EUROPÄISCHE PATENTSCHRIFT

(11) **EP 2 186 064 B1**
(45) Veröffentlichungstag und Bekanntmachung des Hinweises auf die Patenterteilung: **01.01.2020**
(21) Anmeldenummer: 08760121.7
(22) Anmeldetag: 28.05.2008
(51) Int. Cl.: G08B 25/01, B25F 5/00, G06Q 10/06, G08B 13/14, G08B 21/02, G08B 27/00

(54) **WERKZEUGMANAGEMENTSYSTEM**
TOOL MANAGEMENT SYSTEM
SYSTÈME DE GESTION D'OUTILS

(30) Priorität: 26.07.2007 DE 102007035095
(43) Veröffentlichungstag der Anmeldung: 19.05.2010
(73) Patentinhaber: Robert Bosch GmbH, 70442 Stuttgart (DE)
(72) Erfinder: KRAPF, Reiner, 72770 Reutlingen (DE); BRAUN, Heiko, 70178 Stuttgart (DE); MAHLER, Michael, 70771 Leinfelden-Echterdingen (DE); HEES, Alexander, Werner, 74321 Bietigheim-Bissingen (DE)
(86) Internationale Anmeldenummer: PCT/EP2008/056525
(87) Internationale Veröffentlichungsnummer: WO 2009/013045

(56) Entgegenhaltungen:
- EP-A- 0 451 482
- WO-A-2004/010387
- WO-A-2006/036481
- WO-A2-03/038764
- GB-A- 2 352 057
- GB-A- 2 353 180
- US-A1- 2005 128 083
- US-A1- 2005 225 427
- US-A1- 2006 155 582
- US-B1- 6 225 890

## Beschreibung

Die vorliegende Erfindung betrifft ein Werkzeugmanagementsystem mit einem Benutzerkontrollsystem zur Überwachung des Einsatzes zumindest einer Mehrzahl von Werkzeugen, insbesondere von Elektrowerkzeugen.

### Stand der Technik

Ein solches Werkzeugmanagementsystem ist beispielsweise aus der WO 2004/010387 A1 bekannt. Dieses Werkzeugmanagementsystem umfasst ein Benutzerkontrollsystem mit Benutzerendgeräten zur Bereitstellung von autorisierenden Benutzerdaten, die einen Benutzer, der eines der Werkzeuge benutzen will, dahingehend identifizieren, ob er zur Benutzung des Werkzeugs autorisiert ist oder nicht; Datenempfangseinheiten, die an den Werkzeugen vorgesehen und zum Empfangen der von den Benutzerendgeräten bereitgestellten autorisierenden Benutzerdaten geeignet sind; und Datenverarbeitungseinheiten, die in den Werkzeugen integriert und derart ausgebildet sind, dass sie von einer Datenempfangseinheit empfangene autorisierende Benutzerdaten anhand von in einer Speichereinheit hinterlegten Autorisierungsdaten überprüft und einen Betrieb des entsprechenden Werkzeugs in Abhängigkeit von dem Überprüfungsergebnis gestattet oder sperrt. Auf dieses Weise kann verhindert werden, dass nicht autorisierte Personen die entsprechenden Werkzeuge betätigen können. Zudem werden autorisierende Benutzerdaten gemäß der WO 2004/010387 A1 auch während des Betriebs eines Werkzeugs weiter von dem entsprechenden Benutzerendgerät bereitgestellt und überprüft. Entsprechend ist es nicht möglich, dass eine autorisierte Person den Betrieb des Werkzeugs aufnimmt und anschließend ein nicht autorisierter Benutzer den Betrieb des Werkzeugs fortsetzt.

Ein Nachteil bei dem zuvor beschriebenen Werkzeugmanagementsystem besteht darin, dass es insbesondere bei einer großen Anzahl von Werkzeugen und/oder Benutzerendgeräten sehr umständlich ist, die autorisierenden Benutzerdaten, die von den Benutzerendgeräten bereitgestellt werden, und die in der Speichereinheit der einzelnen Werkzeuge hinterlegten Autorisierungsdaten nach Wunsch zu ändern und/oder zu aktualisieren. Soll es beispielsweise einer Person, die ein bestimmtes Benutzerendgerät verwendet, gestattet werden, ein bestimmtes Werkzeug zu benutzen, wozu sie vorher nicht autorisiert war, so müssen neue autorisierende Daten auf das Benutzerendgerät und/oder neue Autorisierungsdaten auf die Speichereinheit des entsprechenden Werkzeugs aufgespielt werden. Hiezu muss das Benutzerendgerät und/oder das Werkzeug zu einer entsprechenden Einrichtung gebracht werden, die das Aufspielen der Daten ermöglicht. Dieser Vorgang ist sehr zeitaufwendig und somit kostenintensiv, insbesondere wenn er häufig und bei einer Vielzahl von Geräten durchgeführt werden muss.

Aus der WO 2006/036481 A2 ist ein elektronische Zugangsberechtigungssystem für Elektrowerkzeuge bekannt, das sicherstellt, dass die Werkzeuge nur bei Vorliegen eines entsprechenden elektronischen Schlüssels gestartet werden können. Zwischen dem Schlüssel, beispielsweise einem PDA und dem Werkzeug besteht dabei eine Datenkommunikation zur Freigabe des Werkzeuges. Mittels eines PCs können die einzelnen Schlüssel des Systems der programmiert werden.

Aus der US 2006/0155582 A1 ist ein modulares, Mikroprozessor gesteuertes Elektrowerkzeugsystem bekannt, bei dem das Elektrowerkzeug einen Sensor aufweist, der es ermöglicht, beispielsweise Arbeitsparameter des Werkzeuges aufzunehmen und digital codiert zu versenden. In einer speziellen Ausgestaltung des Systems ermöglicht der Sensor auch eine Nutzeridentifikation. Ein Mikroprozessor des Systems ermöglicht die Darstellung von Informationen und Hinweisen in Bezug auf den Bearbeitungsvorgang auf einem Display.

Ausgehend von diesem Stand der Technik ist es eine Aufgabe der vorliegenden Erfindung, ein alternatives Werkzeugmanagementsystem zu schaffen.

### Offenbarung der Erfindung

Diese Aufgabe wird gemäß der vorliegenden Erfindung durch ein Werkzeugmanagementsystem zur Koordination und Überwachung des Einsatzes zumindest einer Mehrzahl von Werkzeugen, insbesondere von tragbaren Elektrowerkzeugen, nach Anspruch 1 gelöst. Die abhängigen Ansprüche beziehen sich auf individuelle Ausgestaltungen der vorliegenden Erfindung.

Das erfindungsgemäße Werkzeugmanagementsystem umfasst ein Benutzerkontrollsystem mit Benutzerendgeräten, Datenempfangseinheiten und zumindest einer Datenverarbeitungseinheit. Weiterhin sind Gerätesicherungsvorrichtungen in zumindest einigen der Werkzeuge vorgesehen.

Die Benutzerendgeräte dienen zur Bereitstellung von Benutzerdaten, die einen Benutzer identifizieren, der eines der Werkzeuge benutzen will. Bei diesen Benutzerendgeräten kann es sich beispielsweise um tragbare Speichermedien handeln, die von den Benutzern mitgeführt werden, wie beispielsweise Smart-Cards, Chipkarten, drahtlos übertragende Datensender oder dergleichen, welche dazu geeignet sind, Benutzerdaten zu speichern und durch drahtlose und/oder drahtgebundene Datenübertragung bereitzustellen. Die Benutzerdaten können dabei beispielsweise personenbezogene Daten sein, wie der Name oder die Funktion einer Person in einem Unternehmen - sie können den Benutzer aber auch dahingehend identifizieren, dass er einer von mehreren vordefinierten Benutzergruppen mit unterschiedlichen Nutzungsrechten zugehörig ist. Alternativ kann es sich bei den Benutzerendgeräten auch um solche Geräte handeln, die in die Werkzeuge integriert sind und bei denen die Benutzer selbst Benutzerdaten in Form von Codes, PIN-Nummern oder dergleichen eingeben, was beispielsweise über eine Tastatur erfolgen kann.

Die Datenempfangseinheiten sind in den Werkzeuge vorgesehen und dienen zum Empfangen der von den Benutzerendgeräten bereitgestellten Benutzerdaten.

Die zumindest eine Datenverarbeitungseinheit des Benutzerkontrollsystems ist derart ausgebildet, dass sie die von einer der Datenempfangseinheiten empfangenen Benutzerdaten einer von einer Mehrzahl von vordefinierten, in einer Speichereinheit hinterlegten Benutzergruppen mit unterschiedlichen Benutzungsrechten zum Betrieb des entsprechenden Werkzeugs zuordnet. Dazu weist das Werzkzeugmanagmentsystem eine zentrale Rechnereinheit und eine Datenübertragungssystem auf und überträgt zumindest Benutzer und/oder Benutzungsrechte betreffende Daten zwischen der zentralen Rechnereinheit und den mit den Datenempfangseinheiten versehenen Werkzeugen und die Werkzeuge identifizierende Werkzeugdaten über das Datenübertragungssystem. Dem sich mit Hilfe eines Benutzerendgerätes identifizierenden Benutzer werden also nach der von der Datenverarbeitungseinheit durchgeführten Zuordnung der Benutzerdaten vordefinierte Benutzungsrechte eingeräumt, mit denen er das entsprechende Werkzeug betreiben kann. Auf diese Weise können beispielsweise einem Meister mehr Rechte als einem Lehrling zugestanden werden, beispielsweise ein Arbeiten mit höheren Drehzahlen oder dergleichen. Natürlich können Personen auch ganz von der Benutzung eines Werkzeugs ausgeschlossen werden. Zudem ist ein Datenaustausch und eine entsprechende Datenpflege und -aktualisierung über größere Entfernungen zwischen der zentralen Rechnereinheit und den entsprechenden Werkzeugen möglich, was ein Ändern von Daten binnen einer kurzen Zeitdauer bei geringem Kostenaufwand gestattet.

Die erfindungsgemäß in zumindest einigen der Werkzeuge vorgesehenen Gerätesicherungsvorrichtungen umfassen jeweils einen Sicherheitsmechanismus zur Abkehrung gefährdender Betriebssituationen bei der Verwendung des Werkzeugs und sind derart ausgebildet, dass sie im Falle eines mit Hilfe von Sensoren erkannten Unfalls ein Alarmsignal generieren und über das Datenübertragungssystem an die zentrale Rechnereinheit übertragen. Dazu kann das Werkzeugmanagementsystem vorteilhaft derart eingerichtet sein, dass solche Alarmsignale und/oder basierend auf diesen generierte Signale und/oder Daten automatisch an einen Rettungsdienst gesendet werden. Ferner ist das Werkzeugmanagementsystem derart eingerichtet, dass die Alarmsignale über das Datenübertragungssystem an weitere, mit Datenempfangseinheiten versehene Werkzeuge gesendet werden, und zwar insbesondere an solche, von denen bekannt ist, dass sie sich in der Nähe des Unfallorts befinden. Entsprechend können die Benutzer dieser Werkzeuge, die durch den Alarm auf den Unfall in ihrer Umgebung aufmerksam gemacht werden, zur Hilfe herbeieilen. Bei den Gerätesicherungsvorrichtungen kann es sich beispielsweise um solche handeln, die sicherstellen, dass ein Werkzeug, wie beispielsweise eine Handbohrmaschine, beidhändig von einem Benutzer ergriffen wird, wobei der Sicherheitsmechanismus über entsprechende Sensoren realisiert wird. Auch können Gerätesicherungsvorrichtungen verwendet werden, die eine Arbeitsumgebung eines Werkzeugs, beispielsweise einer Kreissäge oder dergleichen, überwachen, um sicherzustellen, dass keine Person oder kein Körperteil einer Person in einem Gefahrenbereich in der Nähe des Sägeblatts vorhanden ist.

In einer weiteren Ausgestaltung der Erfindung ist vorgesehen, dass Werkzeuge indentifizierende Werkzeugdaten von den Werkeugen über das Datenübertragungssystem an die zentrale Rechnereinheit übertragbar sind, und die Werkzeuge über die Werkzeugdaten dem Werkzeugmanagementsystem derart eindeutig zugeordnet sind, dass einem Benutzer in Abhängigkeit von der Benutzergruppe uneingeschränkte, teilweise eingeschränkte oder gar keine Benutzungsrechte eingeräumt werden, und dass ein Alarmsignal generiert wird, wenn die zentrale Rechnereinheit Werkzeugdaten empfängt, die dem Werkzeugmanagementsystem nicht zugeordnet sind. Auf diese Weise können gestohlene Werkzeuge bei dem Versuch ausfindig gemacht werden, diese in ein neues Werkzeugmanagementsystem zu integrieren. Das Alarmsignal kann beispielsweise automatisch an den Werkzeughersteller übermittelt werden, der dann die entsprechenden Maßnahmen ergreifen kann.

Bevorzugt werden die Werkzeugdaten von den Werkzeugen über das Übertragungssystem in vorbestimmten Zeitintervallen an die zentrale Rechnereinheit übertragen, wobei vorteilhaft dann ein Alarmsignal generiert wird, wenn Werkzeugdaten zu einem vorbestimmten Zeitpunkt von einem Werkzeug nicht an die zentrale Rechnereinheit übertragen werden. Daraufhin kann sofort überprüft werden, ob das entsprechende Werkzeug entwendet wurde. Ist dies nicht der Fall, so kann die Störungsursache behoben werden.

Zudem umfasst das Werkzeugmanagementsystem bevorzugt zumindest an einigen der Werkzeuge vorgesehene Positionsbestimmungseinheiten zum Bestimmen von Werkzeugpositionsdaten, wobei die Positionsbestimmungseinheiten derart ausgebildet sind, dass sie Positionssignale generieren, die über das Datenübertragungssystem an die zentrale Rechnereinheit übertragbar sind. Die Positionssignale werden beispielsweise mit den zuvor beschriebenen Werkzeugdaten übermittelt, um die durch ein Positionssignal angezeigte Position einem Werkzeug zuordnen zu können. Alternativ können die Positionssignale beispielsweise aber auch eine eigene Kodierung zur Identifikation des Werkzeugs aufweisen. Entsprechend kann stets festgestellt werden, wo sich ein Werkzeug zu welchem Zeitpunkt befindet. Dies ist beispielsweise hilfreich, wenn eine Person ein tragbares Werkzeug sucht, das derzeit noch von einem anderen Benutzer verwendet wird. Aber auch in einer Unfallsituation, wie sie zuvor beschrieben wurde, können die Rettungskräfte direkt zu dem Unfallort geleitet werden. Werden die Positionssignale in der Protokolliereinrichtung zusammen mit Datum und Uhrzeit gespeichert, so kann zudem der zeitliche Verlauf der Aufenthaltsorte in Form einer Historie festgehalten werden, was für spätere Analysen nützlich sein kann. Zudem können die Positionssignale und/oder die in Protokolliereinrichtungen gespeicherten Historien verschiedener Werkzeugmanagementsysteme an eine übergeordnete Zentraleinheit automatisch in vorbestimmten zeitlichen Intervallen übermittelt oder von einer solchen abgefragt werden. Diese übergeordnete Zentraleinheit kann sich beispielsweise beim Werkzeughersteller befinden. Die Datenübermittlung kann drahtlos oder drahtgebunden via Internet, RAS-Einwahl oder dergleichen erfolgen. Auf diese Weise können beispielsweise als gestohlen gemeldete Werkzeuge aufgespürt werden. Der rechtmäßige Besitzer kann daraufhin über den Standort seines Werkzeugs informiert werden, zum Beispiel per Email, SMS, Telefon etc.

Das erfindungsgemäße Werkzeugmanagementsystem umfasst zudem vorteilhaft Softwareaktualisierungseinheiten zur Aktualisierung von Werkzeugsoftware und/oder Fernwartungseinheiten zur Fernwartung von Werkzeugen und/oder Ferndiagnoseeinheiten zum Diagnostizieren von Werkzeugzuständen, wobei das Werkzeugmanagementsystem derart eingerichtet ist, dass Daten in Bezug auf Softwareaktualisierung und/oder Fernwartung und/oder Ferndiagnose zwischen der zentralen Rechnereinheit und den entsprechenden Werkzeugen über das Datenübertragungssystem übertragbar sind.

### Ausführungsbeispiel

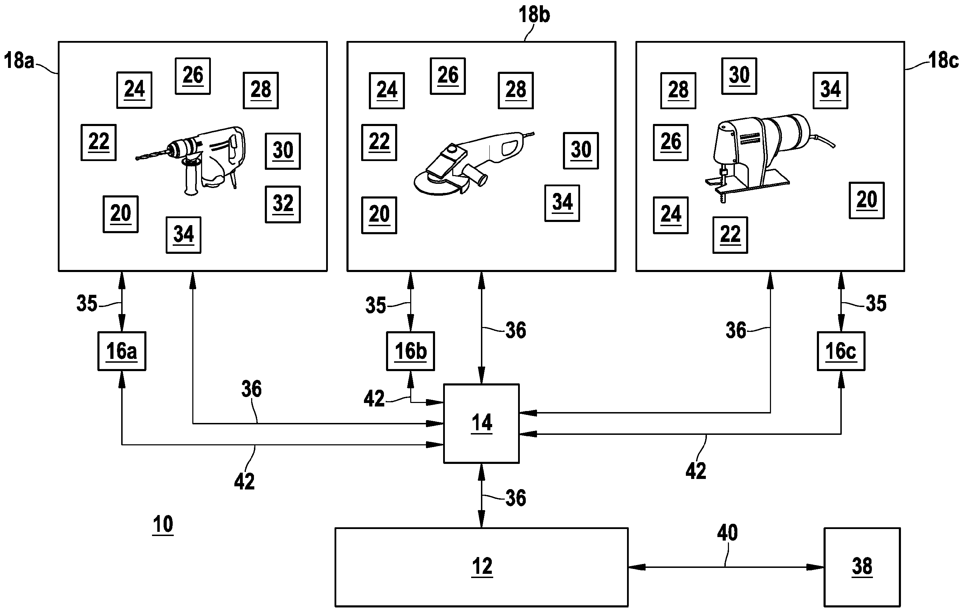

Nachfolgend wird die vorliegende Erfindung anhand eines nicht einschränkenden Ausführungsbeispiels genauer unter Bezugnahme auf die Zeichnung beschrieben. Gleiche Bezugsziffern beziehen sich dabei auf gleiche oder gleichartige Komponenten.

Die Zeichnung zeigt eine schematische Ansicht eines Ausführungsbeispiels eines Werkzeugmanagementsystems 10 gemäß der vorliegenden Erfindung. Das Werkzeugmanagementsystem umfasst eine zentrale Rechnereinheit 12, ein Datenübertragungssystem 14, eine Mehrzahl von Benutzerendgeräten 16a, 16b und 16c sowie mehrere tragbare Elektrowerkzeuge 18a, 18b und 18c. Bei den Benutzerendgeräten 16a, 16b und 16c handelt es sich jeweils um von Personen mitgeführte Smart-Cards, die Benutzerdaten in Form von den Benutzer identifizierenden Zahlencodes bereitstellen, welche auf ihnen gespeichert sind. Das Elektrowerkzeug 18a ist eine Bohrmaschine, 18b ist eine Trennschleifmaschine und 18c eine Stichsäge. Es sollte allerdings klar sein, dass das Werkzeugmanagementsystem mehr als die dargestellten Werkzeuge und Benutzerendgeräte aufweisen kann.

Jedes Elektrowerkzeug 18a, 18b, 18c umfasst eine Datenempfangseinheit 20, eine Datenverarbeitungseinheit 22, eine Speichereinheit 24, eine Gerätesicherungsvorrichtung 26, eine Protokolliereinrichtung 28, eine Positionsbestimmungseinheit 30 und eine Einheit 34, die weitere Funktionen realisiert, insbesondere Softwareaktualisierungs-, Ferndiagnose- und Fernwartungsfunktionen. Das Elektrowerkzeug 18a umfasst ferner eine Akkuüberwachungseinheit 32.

Die Datenempfangseinheiten 20 sind jeweils derart beschaffen, dass sie die von den Benutzerendgeräten 16a, 16b und 16c bereitgestellten Benutzerdaten empfangen können, sobald sich eines der Benutzerendgeräte 16a, 16b und 16c in Übertragungsreichweite befindet, die normalerweise etwa 1m beträgt. Die Benutzerdaten werden im vorliegenden Fall drahtlos von den Benutzerendgeräten 16a, 16b und 16c an die entsprechende Datenempfangseinheit 20 übermittelt, was mit Hilfe der Pfeile 35 dargestellt ist, von dieser an die Datenverarbeitungseinheit 22 weitergeleitet, welche die Benutzerdaten einer von einer Mehrzahl von vordefinierten, in der Speichereinheit 24 hinterlegten Benutzergruppen zuordnet, die durch unterschiedliche Benutzungsrechte gekennzeichnet sind. Entsprechend der vorgenommenen Zuordnung kann das Elektrowerkzeug dann von dem Benutzer im Rahmen der zugeteilten Benutzungsrechte betrieben werden. Einem Benutzer können dabei in Abhängigkeit von der Benutzergruppe uneingeschränkte, teilweise beschränkte oder gar keine Benutzungsrechte eingeräumt werden. Eine Beschränkung kann beispielsweise in Bezug auf die maximale Leistung, Drehzahl, etc. eines der Elektrowerkzeuge 18a, 18b oder 18c erfolgen.

Um die Zuordnung von Benutzerdaten eines Benutzers zu einer Benutzergruppe zu ändern, wenn ein Benutzer beispielsweise anstelle beschränkter Benutzungsrechte uneingeschränkte Benutzungsrechte erhalten soll, müssen die für die Zuordnung verantwortlichen Daten in der Speichereinheit 24 eines oder mehrerer der Werkzeuge 18a, 18b und 18c aktualisiert werden. Dazu werden die entsprechenden Datensätze in der zentralen Rechnereinheit 12 generiert und über das Datenübertragungssystem 14 an die entsprechenden Werkzeuge 18a, 18b, 18c gesendet, was in der Zeichnung durch die Pfeile 36 gekennzeichnet ist. Die alten Datensätze werden dann in der bzw. den Speichereinheiten 24 entsprechend durch die neuen Datensätze ersetzt. Auf diese Weise kann die Aktualisierung der Benutzerdaten problemlos, schnell und kostengünstig realisiert werden.

Die Gerätesicherungsvorrichtungen 26 jedes Werkzeugs 18a, 18b und 18c umfassen jeweils zumindest einen Sicherheitsmechanismus zur Abkehrung gefährdender Betriebssituationen bei der Verwendung des entsprechenden Werkzeugs 18a, 18b, 18c. Vorliegend umfasst das Werkzeug 18a einen Sicherheitsmechanismus, der über entsprechende Sensoren gewährleistet, dass die Bohrmaschine beidhändig von dem Benutzer ergriffen wird. Ist dies nicht der Fall, so wird der Betrieb der Bohrmaschine automatisch verhindert. Die Werkzeuge 18b und 18c umfassen hingegen jeweils einen Sicherheitsmechanismus, der die Arbeitsumgebung im Bereich der Schneidwerkzeuge mit Hilfe geeigneter Sensoren überwacht und sicherstellt, dass sich kein Körperteil einer Person in der Arbeitsumgebung befindet. Erfassen die Sensoren einen Körperteil einer Person, so wird das entsprechende Werkzeug 18b, 18c automatisch abgeschaltet.

Wird daraufhin beispielsweise trotz Abschalten des Werkzeugs 18c mit Hilfe weiterer Sensoren ein Kontakt des Stichsägeblattes mit einer Person registriert, so generiert die Gerätesicherungsvorrichtung 26 der Stichsäge automatisch ein Alarmsignal, das über das Datenübertragungssystem 14 an die zentrale Rechnereinheit 12 übertragen wird (siehe Pfeile 36). Die zentrale Rechnereinheit 12 leitet das Alarmsignal an einen Rettungsdienst 38 weiter, was in der Zeichnung durch den Pfeil 40 gekennzeichnet ist, der entsprechende Rettungskräfte zur Verfügung stellt, um den verunglückten Benutzer ärztlich zu versorgen. Gleichzeitig übermittelt die zentrale Rechnereinheit 12 das Alarmsignal an die Werkzeuge 18a und 18b, wenn sich diese in räumlicher Nähe des Werkzeugs 18c befinden. Auf diese Weise werden die Benutzer der Werkzeuge 18a und 18b über den Unfall am Standort des Werkzeugs 18c informiert und können zu Hilfe kommen.

Durch die zuvor beschriebene Kombination der Gerätesicherungsvorrichtungen 26, des Datenübertragungssystems 14, der zentralen Rechnereinheit 12 und des Rettungsdienstes 38 wird ein umfassendes Unfallmanagementsystem bereitgestellt.

Im Übrigen können auch die Gerätesicherungsvorrichtungen 26 über die zentrale Rechnereinheit 12 und das Datenübertragungssystem 14 auch datentechnisch aktualisiert werden.

Die Positionsbestimmungseinheiten 30 jedes Werkzeugs 18a, 18b und 18c generieren jeweils in vorbestimmten Zeitintervallen Positionssignale, beispielsweise via GPS, die über das Datenübertragungssystem 14 an die zentrale Rechnereinheit 12 übermittelt werden. Auf diese Weise sind die jeweiligen Positionen der Werkzeuge 18a, 18b und 18c stets bestimmbar, und auch ein verunglückter Benutzer kann schnell lokalisiert werden, wenn die zentrale Rechnereinheit 12 ein Alarmsignal von einem der Werkzeuge 18a, 18b oder 18c empfängt. Zudem ist das Werkzeugmanagementsystem 10 derart eingerichtet, dass ein Alarmsignal generiert wird, sobald die von einer Positionsbestimmungseinheit 30 generierten Positionssignale eine Position außerhalb eines vorbestimmten Positionsbereichs anzeigen. Bei dem vorbestimmten Positionsbereich handelt es sich vorliegend um das Firmengelände. Entsprechend wird ein Alarmsignal erzeugt, wenn eines der Werkzeuge das Firmengelände verlässt, wodurch eine Diebstahlsicherung geschaffen wird.

Zudem werden die Positionssignale in der Protokolliereinrichtung 28 zusammen mit Datum und Uhrzeit gespeichert. Auf diese Weise kann der zeitliche Verlauf der Werkzeugaufenthaltsorte in Form einer Historie festgehalten werden. Diese Historie wird dann automatisch in vorbestimmten Zeitintervallen an eine nicht dargestellte übergeordnete Zentraleinheit automatisch übermittelt oder von einer solchen abgefragt. Diese Zentraleinheit, die sich beispielsweise beim Werkzeughersteller befindet, sammelt und überprüft die Historien einer Vielzahl von Werkzeugmanagementsystemen 10 dahingehend, ob sich unter den Werkzeugen ein als gestohlen gemeldetes Werkzeug befindet. Wird ein solches Werkzeug ausfindig gemacht, so kann sein Aufenthaltsort dem rechtmäßigen Besitzer mitgeteilt werden.

Die Akkuüberwachungseinheit 32 des Werkzeugs 18a überwacht den Ladezustand des Werkzeugakkus. Neigt sich diese dem Ende, so wird dem Benutzer dies durch eine entsprechende Einrichtung, die an dem Werkzeug 18a vorgesehen ist, angezeigt, so dass der Benutzer den Akku frühzeitig laden oder austauschen kann. Ferner werden den Akkuladezustand repräsentierende Akkusignale über das Datenübertragungssystem 14 an die zentrale Rechnereinheit 12 übertragen, was ebenfalls durch die entsprechenden Pfeile 36 gekennzeichnet ist. Entsprechend kann beispielsweise Personal damit beauftragt werden, einen neuen geladenen Akku zu dem Werkzeug 18a zu bringen.

Die weitere Einheit 34 repräsentiert weitere Funktionen, die in das Werkzeugmanagementsystem 10 integriert werden können, wie beispielsweise eine Softwareaktualisierungs-, Fernwartungs- oder Ferndiagnosefunktion. Auch die Einheit 34 kann über das Datenübertragungssystem 14 datentechnisch mit der zentralen Rechnereinheit 14 kommunizieren.

Sollen Daten, die auf den Benutzerendgeräten 16a, 16b und 16c gespeichert sind und durch diese bereitgestellt werden, aktualisiert oder geändert werden, so kann dies ebenfalls durch die zentrale Rechnereinheit 12 über das Datenübertragungssystem erfolgen (siehe Pfeile 42), wenn die Benutzerendgeräte 16a, 16b und 16c entsprechend eingerichtet sind.

Die Protokolliereinrichtung 28 dient zum Aufzeichnen verschiedenster Daten. So kann beispielsweise protokolliert werden, welcher Benutzer zu welchem Zeitpunkt eines der Werkzeuge 18a, 18b, 18c benutzt hat, wo sich welches Werkzeug 18a, 18b, 18c wann befunden hat, wann und wo eine der Gerätesicherungsvorrichtungen 26 ein Alarmsignal generiert hat, wann eine der Gerätesicherungsvorrichtungen 26 den Betrieb eines der Werkzeuge 18a, 18b, 18c abgeschaltet hat, wann und bei welchen der Werkzeuge 18a, 18b, 18c Daten oder Software geändert bzw. aktualisiert wurden, wann und welche Wartungsarbeiten an den Werkzeugen 18a, 18b, 18c stattgefunden haben, etc. Die protokollierten Daten können dabei mit entsprechenden Mitteln in Echtzeit oder zu einem späteren Zeitpunkt ausgewertet werden.

Es sollte klar sein, dass die zuvor beschriebene Ausführungsform in keiner Weise als einschränkend zu verstehen ist. Vielmehr sind eine Vielzahl von Änderungen und Modifikationen möglich, die in den Schutzbereich der vorliegenden Erfindung fallen, der in den beiliegenden Ansprüchen definiert ist.

## Patentansprüche

1. Werkzeugmanagementsystem (10) zur Koordination und Überwachung des Einsatzes zumindest einer Mehrzahl von Werkzeugen (18a, 18b, 18c), insbesondere von tragbaren Elektrowerkzeugen, wobei das Werkzeugmanagementsystem (10) ein Benutzerkontrollsystem umfasst, das aufweist:
• Benutzerendgeräte (16a, 16b, 16c) zur Bereitstellung von Benutzerdaten, die einen Benutzer identifizieren, der eines der Werkzeuge (18a, 18b, 18c) benutzen will,
• Datenempfangseinheiten (20) in den Werkzeugen (18a, 18b, 18c) zum Empfangen der von den Benutzerendgeräten (16a, 16b, 16c) bereitgestellten Benutzerdaten,
• zumindest eine Datenverarbeitungseinheit (22), die ausgebildet ist die von einer der Datenempfangseinheiten (20) empfangenen Benutzerdaten einer von einer Mehrzahl von vordefinierten, in einer Speichereinheit (24) hinterlegten Benutzergruppen mit unterschiedlichen Benutzungsrechten zum Betrieb des entsprechenden Werkzeugs (18a, 18b, 18c) zuzuordnen wobei das Werkzeugmanagementsystem (10) eine zentrale Rechnereinheit (12) und ein Datenübertragungssystem (14) aufweist, und ausgebildet ist zumindest Benutzer und/oder Benutzungsrechte betreffende Daten zwischen der zentralen Rechnereinheit (12) und den mit den Datenempfangseinheiten (20) versehenen Werkzeugen (18a, 18b, 18c) und die Werkzeuge (18a, 18b, 18c) identifizierende Werkzeugdaten über das Datenübertragungssystem (14) zu übertragen,
**dadurch gekennzeichnet, dass** das Werkzeugmanagementsystem (10) weiterhin umfasst:
• Gerätesicherungsvorrichtungen (26) in zumindest einigen der Werkzeuge (18a, 18b, 18c), wobei die Gerätesicherungsvorrichtungen (26) jeweils einen Sicherheitsmechanismus zur Abkehrung gefährdender Betriebssituationen bei der Verwendung des Werkzeugs (18a, 18b, 18c) umfassen und derart ausgebildet sind, dass sie im Falle eines mit Hilfe von Sensoren erkannten Unfalls ein Alarmsignal generieren und über das Datenübertragungssystem (14) an die zentrale Rechnereinheit (12) übertragen, und das Werkzeugmanagementsystem (10) ausgebildet ist die Alarmsignale über das Datenübertragungssystem (14) an weitere, mit Datenempfangseinheiten (20) versehene Werkzeuge (18a, 18b, 18c) zu senden.

2. Werkzeugmanagementsystem (10) nach Anspruch 1, **dadurch gekennzeichnet, dass** Werkzeuge (18a, 18b, 18c) indentifizierende Werkzeugdaten von den Werkeugen (18a, 18b, 18c) über das Datenübertragungssystem (24) an die zentrale Rechnereinheit (12) übertragbar sind, und die Werkzeuge (18a, 18b, 18c) über die Werkzeugdaten dem Werkzeugmanagementsystem (10) derart eindeutig zugeordnet sind, dass einem Benutzer in Abhängigkeit von der Benutzergruppe uneingeschränkte, teilweise eingeschränkte oder gar keine Benutzungsrechte eingeräumt werden, und dass ein Alarmsignal generiert wird, wenn die zentrale Rechnereinheit (12) Werkzeugdaten empfängt, die dem Werkzeugmanagementsystem (10) nicht zugeordnet sind.

3. Werkzeugmanagementsystem (10) nach Anspruch 2, **dadurch gekennzeichnet, dass** die Werkzeugdaten von den Werkzeugen (18a, 18b, 18c) über das Datenübertragungssystem (14) in vorbestimmten Zeitintervallen an die zentrale Rechnereinheit (12) übertragen werden, und dass ein Alarmsignal generiert wird, wenn zu einem vorbestimmten Zeitpunkt Werkzeugdaten eines Werkzeugs (18a, 18b, 18c) nicht übertragen werden.

4. Werkzeugmanagementsystem (10) nach Anspruch 1, **dadurch gekennzeichnet, dass** dieses derart eingerichtet ist, dass die Alarmsignale und/oder basierend auf diesen generierte Signale und/oder Daten an einen Rettungsdienst (38) übertragen werden.

5. Werkzeugmanagementsystem (10) nach einem der vorhergehenden Ansprüche, **dadurch gekennzeichnet, dass** dieses an zumindest einigen der Werkzeuge (18a, 18b, 18c) vorgesehene Positionsbestimmungseinheiten (30) zum Bestimmen von Werkzeugpositionsdaten aufweist, wobei die Positionsbestimmungseinheiten (30) derart ausgebildet sind, dass sie Positionssignale generieren, die über das Datenübertragungssystem (14) an die zentrale Rechnereinheit (12) übertragbar sind.

6. Werkzeugmanagementsystem (10) nach einem der vorhergehenden Ansprüche, **dadurch gekennzeichnet, dass** dieses Softwareaktualisierungseinheiten zur Aktualisierung von Werkzeugsoftware und/oder Fernwartungseinheiten zur Fernwartung von Werkzeugen und/oder Ferndiagnoseeinheiten zum Diagnostizieren von Werkzeugzuständen aufweist, wobei das Werkzeugmanagementsystem (10) derart eingerichtet ist, dass Daten in Bezug auf Softwareaktualisierung und/oder Fernwartung und/oder Ferndiagnose zwischen der zentralen Rechnereinheit und den entsprechenden Werkzeugen über das Datenübertragungssystem übertragbar sind.

## Claims

1. Tool management system (10) for coordinating and monitoring the use of at least a plurality of tools (18a, 18b, 18c), in particular portable electric tools, wherein the tool management system (10) comprises a user control system, which has:
• user terminals (16a, 16b, 16c) for providing user data that identifies a user who wishes to use one of the tools (18a, 18b, 18c),
• data reception units (20) in the tools (18a, 18b, 18c) for receiving the user data provided by the user terminals (16a, 16b, 16c),
• at least one data processing unit (22), which is designed to assign the user data received by one of the data reception units (20) to one of a plurality of predefined user groups, stored in a memory unit (24), with different usage rights for the operation of the corresponding tool (18a, 18b, 18c), wherein the tool management system (10) has a central computer unit (12) and a data transmission system (14) and is designed to transmit data at least relating to users and/or usage rights and to transmit tool data identifying the tools (18a, 18b, 18c) between the central computer unit (12) and the tools (18a, 18b, 18c) that are provided with the data reception units (20) via the data transmission system (14),
**characterized in that** the tool management system (10) further comprises:
• equipment-securing devices (26) in at least some of the tools (18a, 18b, 18c), wherein the equipment-securing devices (26) and each comprise a safety mechanism for avoiding dangerous operating situations when using the tool (18a, 18b, 18c) and are designed such that they generate an alarm signal in the case of an accident detected with the aid of sensors and transmit said alarm signal via the data transmission system (14) to the central computer unit (12), and the tool management system (10) is designed to transmit the alarm signals via the data transmission system (14) to further tools (18a, 18b, 18c) that are provided with data reception units (20).

2. Tool management system (10) according to Claim 1, **characterized in that** tool data that identifies tools (18a, 18b, 18c) can be transmitted, via the data transmission system (24), from the tools (18a, 18b, 18c) to the central computer unit (12), and the tools (18a, 18b, 18c) are uniquely assigned to the tool management system (10) by means of the tool data such that, depending on the user group, a user is granted unrestricted, partly restricted or no usage rights, and **in that** an alarm signal is generated if the central computer unit (12) receives tool data that is not assigned to the tool management system (10).

3. Tool management system (10) according to Claim 2, **characterized in that** the tool data is transmitted, via the data transmission system (14), from the tools (18a, 18b, 18c) to the central computer unit (12) at predetermined time intervals, and **in that** an alarm signal is generated if tool data from a tool (18a, 18b, 18c) is not transmitted at a predetermined time.

4. Tool management system (10) according to Claim 1, **characterized in that** it is designed such that the alarm signals, and/or signals and/or data generated on the basis thereof, are transmitted to a rescue service (38).

5. Tool management system (10) according to one of the preceding claims, **characterized in that** it has position determination units (30), which are provided on at least some of the tools (18a, 18b, 18c), for determining tool position data, wherein the position determination units (30) are designed such that they generate position signals, which can be transmitted via the data transmission system (14) to the central computer unit (12) .

6. Tool management system (10) according to one of the preceding claims, **characterized in that** it has software update units for updating tool software and/or remote servicing units for remotely servicing tools and/or remote diagnostic units for diagnosing tool states, wherein the tool management system (10) is designed such that data in respect of software updating and/or remote servicing and/or remote diagnostics can be transmitted, via the data transmission system, between the central computer unit and the corresponding tools.

## Revendications

1. Système de gestion d'outils (10) destiné à coordonner et contrôler l'utilisation d'au moins une pluralité d'outils (18a, 18b, 18c), notamment d'outils électriques portables, le système de gestion d'outils (10) comportant un système de contrôle d'utilisateur comportant :
• des terminaux d'utilisateur (16a, 16b, 16c) destinés à fournir des données d'utilisateur identifiant un utilisateur souhaitant utiliser un des outils (18a, 18b, 18c),
• des unités de réception de données (20) prévues dans les outils (18a, 18b, 18c) et destinées à recevoir les données d'utilisateur fournies par les terminaux d'utilisateur (16a, 16b, 16c),
• au moins une unité de traitement de données (22) conçue pour affecter les données d'utilisateur, reçues par l'une des unités de réception de données (20), à l'un d'une pluralité de groupes d'utilisateurs prédéfinis, qui sont enregistrés dans une unité de mémoire (24), avec des droits d'utilisation différents, et permettant la commande de l'outil (18a, 18b, 18c) correspondant, le système de gestion d'outils (10) comportant une unité centrale de calcul (12) et un système de transmission de données (14), et est conçu pour transmettre des données concernant au moins des utilisateurs et/ou des droits d'utilisation entre l'unité centrale de calcul (12) et les outils (18a, 18b, 18c) munis des unités de réception de données (20) et des données d'outils identifiant les outils (18a, 18b, 18c) par l'intermédiaire du système de transmission de données (14),
**caractérisé en ce que** le système de gestion d'outils (10) comprend en outre :
• des dispositifs de sécurisation d'appareils (26) prévus dans au moins certains des outils (18a, 18b, 18c), dans lequel les dispositifs de sécurisation d'appareils (26) comprennent respectivement un mécanisme de sécurité destiné à éviter des situations de commande dangereuses lors de l'utilisation de l'outil (18a, 18b, 18c) et sont conçus, lors d'un incident détecté à l'aide de capteurs, de manière à ce qu'ils génèrent un signal d'alarme et le transmettent à l'unité centrale de calcul (12) par l'intermédiaire du système de transmission de données (14), et le système de gestion d'outils (10) est conçu pour envoyer les signaux d'alarme par l'intermédiaire du système de transmission de données (14) à d'autres outils (18a, 18b, 18c) munis d'autres unités de réception de données (20).

2. Système de gestion d'outils (10) selon la revendication 1, **caractérisé en ce que** des données d'outils identifiant des outils (18a, 18b, 18c) peuvent être transmises par les outils (18a, 18b, 18c) par l'intermédiaire du système de transmission de données (24) à l'unité centrale de calcul (12), et les outils (18a, 18b, 18c) sont affectés de manière univoque au système de gestion d'outils (10) par l'intermédiaire des données d'outils de manière à ce que des droits d'utilisation non restreints, partiellement restreints soient accordés ou qu'aucun droit d'utilisation ne soit accordé à un utilisateur en fonction du groupe d'utilisateurs, et **en ce qu'**un signal d'alarme est généré lorsque l'unité centrale de calcul (12) reçoit des données d'outils qui ne sont pas affectées au système de gestion d'outils (10).

3. Système de gestion d'outils (10) selon la revendication 2, **caractérisé en ce que** les données d'outils sont transmises par les outils (18a, 18b, 18c) à l'unité centrale de calcul (12) par l'intermédiaire du système de transmission de données (14) à des intervalles de temps prédéterminés, et **en ce qu'**un signal d'alarme est généré lorsque les données d'outils d'un outil (18a, 18b, 18c) ne sont pas transmises à un instant prédéterminé.

4. Système de gestion d'outils (10) selon la revendication 1, **caractérisé en ce qu'**il est conçu de manière à ce que les signaux d'alarme et/ou des signaux et/ou des données générés à partir de ceux-ci soient transmis à un service de secours (38).

5. Système de gestion d'outils (10) selon l'une des revendications précédentes, **caractérisé en ce qu'**il comprend des unités de détermination de position (30) prévues sur au moins certains des outils (18a, 18b, 18c) pour déterminer des données de position des outils, dans lequel les unités de détermination de position (30) sont conçues pour générer des signaux de position qui peuvent être transmis à l'unité centrale de calcul (12) par l'intermédiaire du système de transmission de données (14) .

6. Système de gestion d'outils (10) selon l'une des revendications précédentes, **caractérisé en ce qu'**il comporte des unités de mise à jour de logiciel pour la mise à jour du logiciel d'outil et/ou des unités de télémaintenance pour la télémaintenance d'outils et/ou des unités de diagnostic à distance pour le diagnostic d'états des outils, le système de gestion d'outils (10) étant conçu de manière à ce que des données relatives à la mise à jour du logiciel et/ou à la télémaintenance et/ou au diagnostic à distance puissent être transmises entre l'unité centrale de calcul et les outils correspondants par l'intermédiaire du système de transmission de données.
